# EUROPÄISCHE PATENTSCHRIFT

(11) **EP 0 366 978 B1**
(45) Veröffentlichungstag und Bekanntmachung des Hinweises auf die Patenterteilung: **20.07.1994**
(21) Anmeldenummer: 89118715.5
(22) Anmeldetag: 09.10.1989
(51) Int. Cl.: A23G 9/28, A23G 3/20, A23G 3/00, A23G 9/02

(54) **Verfahren zur Herstellung von zusammengesetzten Konfektprodukten**
Process for making composite confectionary
Procédé de fabrication de confiserie composite

(30) Priorität: 10.10.1988 DE 3834461
(43) Veröffentlichungstag der Anmeldung: 09.05.1990
(73) Patentinhaber: Schöller Lebensmittel GmbH & Co. KG, D-90419 Nürnberg (DE)
(72) Erfinder: Beer, Richard, Ing., D-8500 Nürnberg 60 (DE)
(74) Vertreter: Körber, Wolfhart, Dr.rer.nat.

(56) Entgegenhaltungen:
- EP-A- 0 234 376
- DE-A- 3 231 560
- DE-A- 3 436 578
- DE-A- 3 608 623

## Beschreibung

Die Erfindung bezieht sich auf ein Verfahren zur Herstellung von zusammengesetzten Konfektprodukten, bestehend aus mehreren übereinanderliegenden, aus extrudierten Strängen gebildete Konfektschichten, insbesondere aus Speiseeis, von denen mindestens eine wellenförmig und ggfs. sich selbst überlappend verläuft, wobei die Konfektschichten auf ein Förderband extrudiert werden und wobei zur Erzeugung der Wellenform die Bewegungskomponente der Extrusion größer ist als die Bewegung des Förderbandes.

Ein Verfahren der oben genannten Art ist aus der DE-PS 32 31 560 bekannt. Zur Herstellung eines Konfektproduktes mit Schichten, die eine andere als flache Oberfläche aufweisen und sich selbst überlappen, wird dort mindestens eine der Extrusionsdüsen laufend hin- und hergeschwenkt, damit die dortige Form der Schichten erhalten wird.

Aus der DE-PS 34 36 578 ist ein Verfahren zur Herstellung eines Konfektmaterials mit übereinanderliegenden Schichten, von denen mindestens eine wellenförmig ausgebildet ist, und bei der sich ggfs. benachbarte Abschnitte der Schicht sogar überlappen, bekannt. Die einzelnen Schichten werden dort aus ortsfest gehaltenen Extrusionsdüsen auf ein mit konstanter Geschwindigkeit bewegtes Förderband extrudiert. Die dortige Extrusionsgeschwindigkeit liegt über der Fördergeschwindigkeit des Förderbandes. Der dortige Effekt wird dadurch begründet, daß durch die höhere Extrusionsgeschwindigkeit das Konfektmaterial staut und daher Berge wirft.

Die bekannten Verfahren sind relativ aufwendig und benötigen Steuer- bzw. Regeleinheiten zur Herstellung der gewünschten Schichten. Für das Schwenken der Extrusionsdüsen bei der DE-PS 32 31 560 wird zusätzlich ein Antrieb benötigt. In der DE-PS 34 36 578 wird zwar durch das dortige Verfahren ein Konfektprodukt mit gestauten Bergen bzw. Wellen erzeugt, jedoch muß immer die Geschwindigkeitsdifferenz zwischen Extrusionsgeschwindigkeit und Geschwindigkeit des Förderbandes berücksichtigt werden, so daß die dortige gewünschte Form der Schichten erhalten wird.

Aufgabe der Erfindung ist es, das eingangs genannte Verfahren zu vereinfachen und die rheologischen Eigenschaften des Konfektmaterials selber auszunutzen, um ein Konfektprodukt mit wellenförmigen Schichten bereitzustellen.

Diese Aufgabe wird in überraschend einfacher Weise dadurch gelöst, daß zumindest ein erster Ablagepunkt auf dem Förderband für den aus wenigstens einer Extrusionsdüse austretenden Stranganfang gegenüber der vertikalen Austrittsbewegung des Extrusionsstranges seitlich versetzt wird und sich das pastöse Konfektmaterial aufgrund einer seitlichen Schwerpunktverlagerung des Stranges aus seiner eigenen Gewichtskraft seitlich auf das Förderband oder bereits abgelegte Strangstücke ablegt und daß spätestens dann das Förderband seitlich versetzt wird, wenn mindestens eine Schlaufe mit mindestens zwei übereinanderliegenden Strangstücken geformt ist.

Die Erfindung wird durch die Merkmale der Unteransprüche weitergebildet.

Die durch die Erfindung erreichten Vorteile sind im wesentlichen darin zu sehen, daß in überraschend einfacher Weise Extrusionsstränge aufgrund einer seitlichen Schwerpunktverlagerung auf das sich in einem quasi stationären Zustand befindliche Förderband abgelegt werden, so daß der erfindungsgemäße Effekt nahezu unabhängig von der Geschwindigkeit des Förderbandes bzw. unabhängig von der Geschwindigkeitsdifferenz zwischen Extrusions- und Förderbandgeschwindigkeit und unabhängig von der Oberflächenbeschaffenheit des Förderbandes, wodurch bei bekannten Verfahren (DE-PS 34 36 578) der Extrusionsstrang mitgenommen wird, eintritt. Durch das erfindungsgemäße Ablegen der Extrusionsstränge wird ferner vermieden, daß das pastöse Konfektmaterial staut und aus diesem Grunde Wellen bzw. Berge wirft.

Mit Hilfe des erfindungsgemäßen Verfahrens wird erreicht, daß die Extrusion direkt auf flache Tabletts, beispielsweise thermogeformte Kunststofftabletts mit Umlaufrand und nicht auf das Förderband selbst erfolgt.

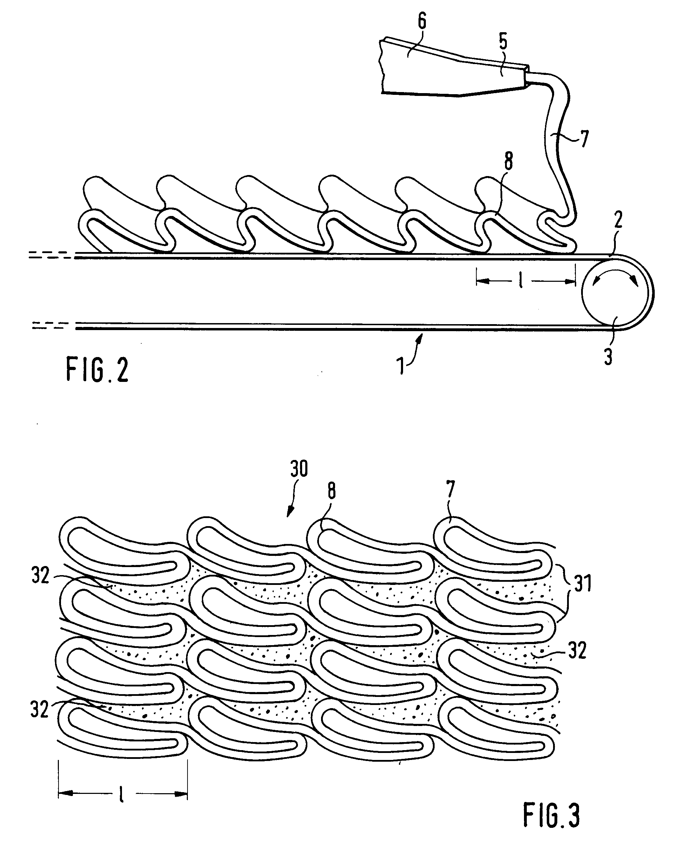

Erfindungsgemäß wird das Förderband nach Festlegen eines ersten Ablagepunktes des ausgetretenen Extrusionsstranges auf demselben schrittweise um die Länge (1) der ersten Schlaufenbreite seitlich versetzt (vergleiche Figur 2 und 3), wobei die Länge (1) einer Schlaufenbreite von der Extrusionsgeschwindigkeit, der Frequenz der seitlichen Versetzung des Förderbandes und den rheologischen Eigenschaften des Konfektmaterials beeinflußt werden kann. Je nach Variation dieser Bedingungen kann die Länge (1) verändert sein.

Ferner kann das Förderband spätestens erst dann verschoben werden, wenn man mehr als zwei Schlaufen abgelegt hat. In einer wesentlichen Ausgestaltungsform sind die Schlaufen fortlaufend, sich selbst überlappend auf dem Förderband abgelegt, wobei die Schlaufen, die sich in einer Ebene einer Konfektschicht erstrecken, aus ein und demselben Strang gebildet werden. Um ein mehrschichtiges Konfektprodukt zu erhalten, ist bzw. sind die Schlaufe und/oder die Schlaufen, die sich in der Ebene jeder Konfektschicht erstrecken, in übereinanderliegenden Konfektschichten, die sich überlappen, abgelegt.

Bei Einhalten dieser erfindungsgemäßen Verfahrensbedingungen ist es ohne weiteres möglich, die extrudierten Speiseeis-Stränge dicker als 5 mm herzustellen und die Stränge beliebig aus Milcheis, Wassereis oder auch aus Milcheis-Sorten, die absichtlich durch Unterschlagen mit Luft angereichert worden sind, aufzubauen. Die belüfteten, gefrorenen Konfektmaterialschichten können aber ebenso eine Schichtdicke von weniger als 5 mm aufweisen.

Alle verfahrensgemäßen Ausgestaltungen der Erfindung tragen dazu bei, ein deutlich verbessertes und weiterentwickeltes Endprodukt zu erzeugen, wobei das entstehende Konfektprodukt wesentlich durch das Verfahren charakterisiert ist. Wird parallel und anliegend zu jeder wellenförmigen Schicht eine Schicht aus Konfektmaterial anderer Qualität abgelegt, so kann man den Gehalt an Nicht-Eisstoffen im Konfektmaterial deutlich heraufsetzen. In Folge des relativ hohen Gehaltes an diesen Stoffen werden Zunge und Magen besonders wenig belastet.

Mit Hilfe des erfindungsgemäßen Verfahrens wird ein zusammengesetztes gefrorenes Konfektprodukt mit mehreren übereinander angeordneten Schichten eines gefrorenen Konfektmaterials hergestellt, wobei zwischen benachbarten Schichten dieses Konfektmaterials Zwischenschichten aus Konfektmaterial anderer Qualität, insbesondere auf Fettbasis wie Kuvertüre, Kakao-Glasur, Nougat und/oder loses ungleichmäßig verteiltes Konfektmaterial, wie Schokoladenplättchen und gleichartiges Material, angeordnet sein können. Ferner ist das erfindungsgemäß hergestellte Konfektprodukt dadurch charakterisiert, daß die flachen Stränge einen vorzugsweise rechteckigen oder aber auch sternförmigen oder runden Querschnitt oder dergleichen haben, die Stränge in Form von hin- und hergehenden Wellen, die sich in der Ebene jeder Konfektschicht erstrecken, schlaufenförmig abgelegt sind und die wellenförmigen Schlaufen der Stränge in übereinanderliegenden Konfektschichten so gelegt sind, daß sie sich überlappen.

Dieses Konfektprodukt zeichnet sich nicht nur durch ein besonderes Aussehen, sondern insbesondere durch ein neuartiges, besonderes Eßerlebnis aus.

Das belüftete, gefrorene Konfektmaterial kann beispielsweise Eiskrem sein.

Soll der Formkörper aus einem einzigen fortlaufend abgelegten Strang bestehen, so ist bei einer Vorrichtung zur Herstellung des vorgeschlagenen zusammengesetzten Konfektproduktes nur eine einzige Düse vorgesehen, welche gegebenenfalls zur Anpassung an die wachsende Höhe des Konfektproduktes vertikal von der Ablage verstellbar ist. Um den erfindungsgemäßen Effekt zu erreichen, ist es nicht notwendig, daß die Extrusionsdüse hin- und herbewegt wird.

Mit einer Vorrichtung dieser Art kann das vorgeschlagene Konfektprodukt wirtschaftlich und schnell gefertigt werden. Der Düse wird üblicherweise vorgefrorene Speiseeismasse bei einer Temperatur von beispielsweise -5 bis -10°C zugeführt. Als Ablage für das Konfektprodukt kann ein geeignetes Tablett aus Pappe, Kunststoff, Gebäck oder dergleichen dienen. Wie bereits oben erwähnt, wird von einer Vorrichtung ausgegangen, bei der eine Düse oder mehrere Düsen nebeneinander und mit der bzw. den Austrittsöffnungen nach unten auf einer fixiert gelagerten Halteplatte angeordnet ist bzw. sind, bei der die Düse bzw. die Düsen jeweils über eine Leitung mit einem Verteilerkopf verbunden sind und bei der unterhalb der Düse bzw. Düsen eine bewegliche Ablage für das Extrudat angeordnet ist, wie aus der DE-PS 34 36 578 bekannt. Zum erfindungsgemäßen Herstellen des zusammengesetzten Konfektproduktes wird ein erster Ablagepunkt des aus der bzw. den Extrusionsdüsen austretenden Stranganfanges gegenüber der vertikalen Austrittsbewegung des Extrusionsstranges zur Ablage eben der des Förderbandes seitlich versetzt, so daß sich das pastöse Konfektmaterial aufgrund einer seitlichen Schwerpunktverlagerung des Stranges aus seiner eigenen Gewichtskraft seitlich abgelegt wird. Spätestens dann wird das Förderband kontinuierlich mit extrem niedriger Geschwindigkeit seitlich versetzt, so bald mindestens eine Schlaufe mit mindestens zwei übereinanderliegenden Strangstücken geformt ist. Somit wird eine erste Lage Speiseeisextrudat auf die Unterlage abgelegt. Alsdann wird die Unterlage schrittweise fortbewegt und einer zweiten Düseneinrichtung zugeführt. Während die zweite Düseneinrichtung die zweite strangförmig ausgebildete Extrudatlage aufbringt, wird eine frische Ablageplatte unter die erste Düseneinrichtung geschoben und dort das Verfahren von vorne begonnen. Auf diese Weise läßt sich bei einer beliebig erweiterten Aufbaustraße je nach Wunsch ein mehrschichtiger, beispielsweise vier-, fünf-, sechs- oder achtschichtiges Konfektprodukt schnell und wirtschaftlich herstellen.

Weiterhin ist auch eine Vorrichtung vorgesehen, die zur erfindungsgemäßen Herstellung von zusammengesetzten Eiskonfektprodukten geeignet ist und die über eine Vielzahl von Extrusionsdüsen, beispielsweise dünnen, schlitzförmig gestalteten Extrusionsdüsen, verfügt, die zum Extrudieren eines extrudierbaren Konfektmaterials als in aufeinanderfolgenden dünnen Schichten auf einem Förderband oder einem anderen sich bewegenden Substrat angeordnet bzw. bestimmt ist, und welche Vorrichtung gegebenenfalls auch ausgestattet ist, entweder zwischen den Extrusionsdüsen oder im Auslaß an jede Extrusionsdüse, mit Kuvertüre-Sprühauslässen oder anderen Zuführungsauslässen, die zum Aufsprühen oder Zuführen des Kuvertürematerials auf die entsprechende extrudierte Schicht des Eiskremmaterials auf dem Förderband angeordnet und bestimmt sind, und zwar vor dem Beschichten mittels einer nachfolgenden extrudierten Schicht.

Eine Ausgestaltungsform des erfindungsgemäß hergestellten Produktes ist ein zusammengesetztes Konfektprodukt mit einer Vielzahl von dünnen Schichten eines extrudierten Eiskonfektmaterials, welche Schichten durch Schichten eines vorzugsweise aufgesprühten Kuvertürematerials voneinander getrennt sind. Bei bestimmten Beispielen der Produkte sind einige oder alle der dünnen extrudierten Schichten mit einem dekorativen Muster ausgebildet.

Das fertig aufgebaute Konfektprodukt wird alsdann in einen Kühltunnel (Härtevorrichtung) eingeschoben und auf Lagertemperatur von etwa -20 oder -30°C abgekühlt.

Die schematisch zu verstehenden Zeichnungen der Figuren 1, 2 und 3 und die nachfolgende Beschreibung zeigen ausschließlich beispielhaft zu verstehende Ausführungsformen der Erfindung.

Es zeigen:
- Figur 1: eine schematische Darstellung einer Vorrichtung zum erfindungsgemäßen Herstellen von Konfektprodukten;
- Figur 2: eine schematische Darstellung einer Vorrichtung zum erfindungsgemäßen Herstellen von Konfektprodukten;
- Figur 3: eine Seitenansicht eines Beispieles eines mit dem erfindungsgemäßen Verfahren hergestellten Konfektproduktes.

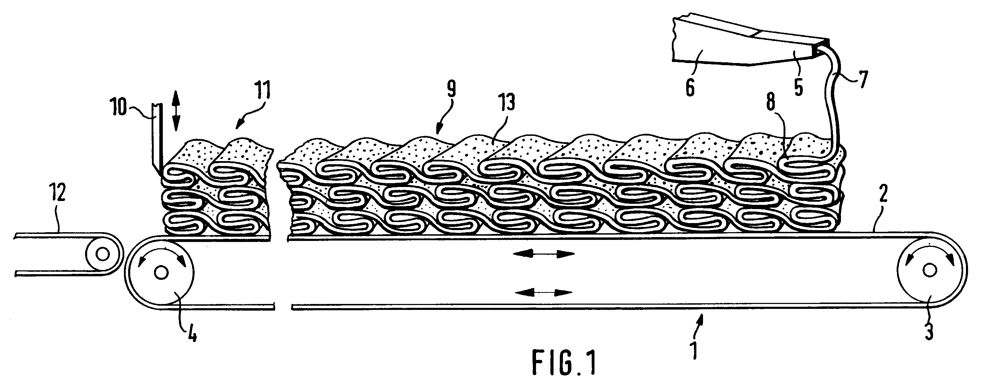

Die in Figur 1 dargestellte Vorrichtung besitzt ein Förderband 1 mit einem endlosen Riemen 2, der zwischen zwei Transportrollen 3, 4 gespannt ist. Mindestens eine der Transportrollen 3 oder 4 wird durch eine nicht dargestellte Antriebseinrichtung, beispielsweise einen Elektro-Getriebemotor, bewegt. Die Bewegungskomponente ist sowohl in der einen als auch in der anderen Pfeilrichtung möglich. Der Antrieb kann sowohl kontinuierlich mit extrem niedriger Geschwindigkeit als auch schrittweise erfolgen. Bei kontinuierlichem Betrieb werden die Transportrollen mit konstanter Geschwindigkeit angetrieben. Oberhalb des Obertrums des endlosen Riemens 2 ist eine Extrusionsdüse 5 mit schlitzförmiger Austrittsöffnung angeordnet. Die Austrittsöffnung liegt parallel zu der Ebene des Riemens 2. Die Einspeisseite 6 der Düse 5 ist über eine nicht dargestellte Leitung (beispielsweise eine Schlauchleitung) mit einem ebenfalls nicht dargestellten Verteilerkopf verbunden. Der Verteilerkopf hat eine Hauptzuleitung, die ihrerseits unmittelbar zu einer unter Druck stehenden Speiseeis-Lieferquelle, beispielsweise einem Extruder, führt. Die Düse 5 ist an einer (nicht dargestellten) Halteplatte fixiert. Die Extrusionsdüse 5 ist in ihrer Höhe gegenüber dem Förderband 1 justierbar, wobei es auch möglich ist, daß sie mit mehreren (nicht dargestellten) Düsen gemeinsam an einem - nicht dargestellten - Träger befestigt sind, der gegenüber dem Transportband verschwenkt werden kann. Hinter der Extrusionsdüse 5 kann eine Sprühdüse angeordnet sein. Aus der Extrusionsdüse 5 wird das Konfektmaterial in Form einer pastösen Masse, wie beispielsweise Eis, extrudiert, während aus den (nicht dargestellten) Sprühdüsen feinpulvriges Material, wie zum Beispiel Schokoladenplättchen, aufgesprüht werden.

Zum Betrieb der Vorrichtung wird der Hauptzuleitung unter Druck stehendes Speiseeis zugeleitet. Dieses Eis wird über den Verteilerkopf und die Leitungen auf die Düse 5 verteilt.

Die Arbeitsweise der obengenannten Vorrichtung ist wie folgt:
Das Förderband wird kontinuierlich mit extrem niedriger Geschwindigkeit seitlich versetzt. Vor der Extrusionsdüse 5 kann ein Tablett auf das Förderband 1 abgelegt werden. Aus dem Verteilerkopf wird nun über Leitungen jeweils Konfektmaterial, wie zum Beispiel belüftetes Eis, zu der Extrusionsdüse 5 gefördert und tritt dort mit einer konstanten Bewegungskomponente aus. Die Bewegungskomponente der Extrusion ist dabei größer als die Bewegung des Förderbandes. Das Ablegen einer ersten Lage Speiseeisextrudat auf die Unterlage geschieht nun folgendermaßen:
Ein erster Ablagepunkt des aus der Extrusionsdüse 5 austretenden Stranganfanges wird gegenüber der vertikalen Austrittsbewegung des Extrusionsstranges zur Ablageebene des Förderbandes 2 seitlich versetzt, so daß sich das pastöse Konfektmaterial aufgrund einer seitlichen Schwerpunktverlagerung des Stranges 7 aus seiner eigenen Gewichtskraft seitlich abgelegt wird. Darauf wird das Förderband 2 seitlich versetzt, wenn mindestens eine Schlaufe 8 mit mindestens zwei übereinanderliegenden Strangstücken geformt ist. Die seitliche Versetzung erfolgt um die Länge 1 (siehe Figur 2 und 3) der ersten Schlaufenbreite des ausgetretenen Extrusionsstranges. Im folgenden werden nun mehrere Schlaufen fortlaufend sich selbst überlappend abgelegt, so daß eine erste Lage Speiseeisextrudat auf das Förderband 2 abgelegt wird. Alsdann wird das Förderband fortbewegt und einer zweiten Düseneinrichtung zugeführt. Während diese zweite Düseneinrichtung die zweite strangförmig ausgebildete Extrudatlage aufbringt, wird eine frische Ablageplatte unter die erste Düseneinrichtung bewegt und dort das Verfahren von vorne begonnen. Auf diese Weise läßt sich bei einer beliebig erweiterten Aufbaustraße je nach Wunsch ein mehrschichtiger, beispielsweise vier-schichtiges Konfektprodukt herstellen. Der entstehende schematisch angedeutete Konfektstrang 9 kann am Ende des Bandes zwei durch eine dort angeordnete und auf- und abbewegbare Schneideeinrichtung 10 abgelängt werden, so daß Konfektproduktstücke 11 entstehen, welche durch ein weiteres Förderband 12 abgefördert werden können. Von nicht dargestellten Sprühdüsen können geschlossene Schichten oder auch nur einzelne, nicht zusammenhängende Partikel 13, wie zum Beispiel Schokoladenplättchen, aufgesprüht werden. Am Ende der Vorrichtungsstraße kann dann noch eine weitere Düseneinrichtung vorgesehen sein, die die Aufgabe hat, eine abschließende Kuvertüren-Krone oder Sahne-Krone auf die erzeugten Konfektprodukte zu geben.

Wie bereits erwähnt, werden die in einer solchen Straße erzeugten Formkörper alsdann einem Härtetunnel (Tiefkühltunnel) zugeführt, wo sie schnell und schockartig auf Lagertemperaturen von etwa -30°C abgekühlt werden.

Das in Figur 3 dargestellte zusammengesetzte Konfektprodukt ist als Ganzes mit 30 bezeichnet. Es besteht aus extrudierten Speiseeissträngen 7, die in Form von hin- und hergehenden Wellen, die sich in der Ebene jeder Konfektschicht 31 erstrecken, schlaufenförmig abgelegt sind. Die wellenförmigen Schlaufen 8 der Stränge sind in übereinanderliegenden Konfektschichten 31 so gelegt, daß sie sich überlappen. Zwischen den Konfektschichten 31 befinden sich noch jeweils eine dünne Trennschicht 32, welche aus Schokoladenkuvertüre, Nougat, Schokoladenstückchen oder dergleichen bestehen kann.

Bei den in den Figuren 1, 2 und 3 dargestellten Ausführungsbeispielen haben die flachen Stränge 7 einen rechteckigen Querschnitt. Statt dessen können aber auch beliebige andere Querschnitte gewählt werden. Es werden runde, ovale, dreieckige oder sternförmige Querschnitte bevorzugt.

Figur 2 zeigt ein Beispiel eines gemäß dem erfindungsgemäßen Verfahren hergestellten Konfektmaterials. Gemäß Figur 2 ist eine erste Lage Speiseeisextrudat auf das Förderband abgelegt. Der Strang 7 ist in Form von hin- und hergehenden Wellen, die sich in der Ebene der Konfektschicht erstreckt, schlaufenförmig abgelegt. Wie aus Figur 2 zu ersehen ist, wird die erste Konfektschicht des entstehenden Produkts aus mindestens einer abgelegten Schlaufe unter seitlicher Versetzung des Förderbandes, wodurch der Extrusionsstrang abgelenkt wird, und der fortlaufende Strang unter die benachbarte Schlaufe abgelegt wird, gebildet.

## Patentansprüche

1. Verfahren zur Herstellung von zusammengesetzten Konfektprodukten, bestehend aus mehreren übereinanderliegenden, aus extrudierten Strängen (7) gebildete Konfektschichten (31), insbesondere aus Speiseeis, von denen mindestens eine wellenförmig und ggfs. sich selbst überlappend verläuft, wobei die Konfektschichten (31) auf ein Förderband (2) extrudiert werden und wobei zum Erzeugen der Wellenform die Bewegungskomponente der Extrusion größer ist als die Bewegung des Förderbandes, dadurch gekennzeichnet, daß zumindest ein erster Ablagepunkt auf dem Förderband (2) für den aus wenigstens einer Extrusionsdüse (5) austretenden Stranganfang gegenüber der vertikalen Austrittsbewegung des Extrusionsstranges seitlich versetzt wird und sich das pastöse Konfektmaterial aufgrund einer seitlichen Schwerpunktverlagerung des Stranges (7) aus seiner eigenen Gewichtskraft seitlich in einer hin- und hergehenden Schlaufe auf das Förderband bzw. das bereits abgelegte Strangstück der Schlaufe ablegt und daß spätestens dann das Förderband (2) seitlich schrittweise versetzt wird, wenn mindestens eine Schlaufe (8) mit mindestens zwei übereinanderliegenden Strangstücken geformt ist.

2. Verfahren nach Anspruch 1, dadurch gekennzeichnet, daß das Förderband (2) nach Festlegen eines ersten Ablagepunktes des ausgetretenen Extrusionsstranges (7) und Ablegen der ersten Schlaufe schrittweise um die Länge der ersten Schlaufenbreite seitlich versetzt wird.

3. Verfahren nach Anspruch 1, dadurch gekennzeichnet, daß das Förderband (2), nachdem man mehr als zwei Schlaufen (8) übereinander abgelegt hat, schrittweise verschoben wird.

4. Verfahren nach Anspruch 1, dadurch gekennzeichnet, daß das Förderband (2) nach Festlegen eines ersten Ablagepunktes des ausgetretenen Extrusionsstranges (7) und Ablegen der ersten Schlaufe schrittweise um variable Längen gegenüber der ersten Schlaufenbreite seitlich versetzt wird.

5. Verfahren nach Anspruch 4, dadurch gekennzeichnet, daß die Schlaufen (8), die sich in einer Ebene einer Konfektschicht (31) erstrecken, aus ein und demselben Strang (7) gebildet werden.

6. Verfahren nach Anspruch 1 bis 5, dadurch gekennzeichnet, daß man die Schlaufe (8) und/oder die Schlaufen, die sich in der Ebene jeder Konfektschicht (31) erstrecken, in übereinanderliegenden Konfektschichten, die sich überlappen, ablegt.

## Claims

1. Process for the production of composite confectionery products, consisting of a plurality of superposed confectionery layers (31) formed of extruded strands (7), in particular of comestible ice or icecream, of which layers at least one is wave-like and possibly self-overlapping, the confectionery layers (31) being extruded onto a conveyor belt (2) and, to produce the wave-like form, the movement component of the extrusion is larger than the movement of the conveyor belt, characterized in that at least a first deposition point on the conveyor belt (2) for the beginning of the strand, emerging from at least one extrusion nozzle (5), is laterally displaced relative to the vertical emergence movement of the extrusion strand and the paste-like confectionery material deposits, under its own weight, on the conveyor belt or the previously deposited strand portion of the loop, in a loop going laterally back and forth, as a result of a lateral displacement of the centre of gravity of the strand (7), and in that the conveyor belt (2) is then laterally displaced stepwise at the latest when at least one loop (8) with at least two superposed strand portions is formed.

2. Process according to claim 1, characterized in that the conveyor belt (2) is laterally displaced stepwise by the extent of the first loop width after determination of a first deposition point of the emerged extrusion strand (7) and deposition of the first loop.

3. Process according to claim 1, characterized in that, after more than two loops (8) have been deposited one over the other, the conveyor belt (2) is moved stepwise.

4. Process according to claim 1, characterised in that the conveyor belt (2) is laterally displaced stepwise by variable extents relative to the first loop width after determination of a first deposition point of the emerged extrusion strand (7) and deposition of the first loop.

5. Process according to claim 4, characterized in that the loops (8) which extend at one level of a confectionery layer (31) are formed from one and the same strand (7).

6. Process according to claim 1 to 5, characterized in that the loop (8) or loops which extend at the level of each confectionery layer (32) are deposited in superposed confectionery layers which overlap one another.

## Revendications

1. Procédé de fabrication de produits de confiserie composites, se composant de plusieurs couches superposées (31) de produit de confiserie, formées de cordons extrudés (7), en particulier en glace comestible, dont une au moins s'étend en ondulations et, le cas échéant, en se chevauchant sur elle-même, les couches (31) de produit de confiserie étant extrudées sur une courroie transporteuse (2) et la composante du mouvement de l'extrusion étant plus grande que le mouvement de la courroie transporteuse pour produire la forme ondulée,
**caractérisé** en ce qu'au moins un premier point de dépôt sur la courroie transporteuse (2) pour le commencement de cordon sortant d'au moins une buse d'extrusion (5) est décalé latéralement par rapport au mouvement vertical de sortie du cordon d'extrusion, et que la matière de confiserie pâteuse, à cause d'un déplacement latéral du centre de gravité du cordon (7),se dépose latéralement sous l'effet de son propre poids en formant une boucle allant et venant sur la courroie transporteuse ou sur le tronçon de cordon de la boucle déjà déposé, et en ce que la courroie transporteuse (2) est déplacée latéralement pas à pas, au plus tard quand au moins une boucle (8) avec au moins deux tronçons de cordon superposés a été formée.

2. Procédé selon la revendication 1, caractérisé en ce que la courroie transporteuse (2) est décalée latéralement pas à pas après l'établissement d'un premier point de dépôt du cordon d'extrusion (7) sorti et après le dépôt de la première boucle, de la longueur de la première largeur de boucle.

3. Procédé selon la revendication 1, caractérisé en ce que la courroie transporteuse (2) est décalée pas à pas après qu'on a déposé plus de deux boucles (8) l'une sur l'autre.

4. Procédé selon la revendication 1, caractérisé en ce qu'après l'établissement d'un premier point de dépôt du cordon d'extrusion (7) sorti et le dépôt de la première boucle, la courroie transporteuse (2) est décalée latéralement pas à pas sur des longueurs variables par rapport à la largeur de la première boucle.

5. Procédé selon la revendication 4, caractérisé en ce que les boucles (8) qui s'étendent dans un plan d'une couche de confiserie (31) sont formées à partir d'un seul et même cordon (7).

6. Procédé selon les revendications 1 à 5, caractérisé en ce qu'on dépose la boucle (8) et/ou les boucles qui s'étendent dans le plan de chaque couche de confiserie (31) en couches de confiserie superposées qui se chevauchent.
